# EUROPÄISCHE PATENTSCHRIFT

(11) **EP 1 557 236 B1**
(45) Veröffentlichungstag und Bekanntmachung des Hinweises auf die Patenterteilung: **14.09.2011**
(21) Anmeldenummer: 04030084.0
(22) Anmeldetag: 18.12.2004
(51) Int. Cl.: B23P 15/00, F16C 7/02, F16C 9/04

(54) **Verfahren zur Herstellung eines Pleuels mit einer innenbeschichteten Bohrung**
Method of manufacturing a connecting rod with an internally coated bore
Procédé de fabrication d'une bielle avec un alésage revêtu intérieurement

(30) Priorität: 23.01.2004 DE 102004003403
(43) Veröffentlichungstag der Anmeldung: 27.07.2005
(73) Patentinhaber: Bayerische Motoren Werke Aktiengesellschaft, 80809 München (DE)
(72) Erfinder: Luchner, Clemens, 83236 Übersee (DE); Stothard, Nigel, Dr., 81929 München (DE)

(56) Entgegenhaltungen:
- EP-A- 0 336 630
- WO-A-99/05339
- DE-A1- 19 544 824
- DE-A1- 19 919 688
- JP-A- 61 163 260
- US-A1- 2002 095 846

## Beschreibung

Die Erfindung betrifft ein Verfahren zur Herstellung eines Pleuels insbesondere einer Kraftfahrzeugbrennkraftmaschine, mit einer innenbeschichteten Bohrung. Ein solches Verfahren ist aus der WO 99 05 339, die dem nächstliegenden Stand der Technik entspricht, bekannt.

Pleuel verbinden in Brennkraftmaschinen den sich im Betrieb linear bewegenden Kolben mit der rotierenden Kurbelwelle und dienen zur Kraftübertragung. Zur Verbindung mit dem Kolben mittels eines Kolbenbolzens weist ein Pleuel ein kleines Pleuelauge auf, ein großes Pleuelauge korrespondiert mit dem Hubzapfen der Kurbelwelle. Neben einer Hubbewegung führt das Pleuel im Betrieb eine Schwenkbewegung aus, wobei kleines und großes Pleuelauge hochbelastete Lagerstellen bilden.

Aus der Funktion des Pleuels ergibt sich, dass einerseits eine besonders große Belastungsfähigkeit und andererseits eine sehr geringe Masse angestrebt wird.

Um diesen Forderungen gerecht zu werden, schlägt beispielsweise die WO 96/04485 A1 vor, im kleinen und/oder großen Pleuelauge ein Lager ausschließlich durch eine Vergütung und/oder eine Beschichtung der Innenfläche des Lagerauges zu bilden. Um die erforderlichen Lagereigenschaften, insbesondere in Bezug auf Tragfähigkeit und Gleiteigenschaft, zu erzielen, ist es jedoch unbedingt erforderlich, dass die Lagerschicht(en) fehlerfrei ausgebildet und mit dem Grundmaterial des Pleuels verbunden sind. Zur Aufbringung der Vergütung bzw. Beschichtung nennt die WO 96/04485 A1 pauschal ein Reihe von üblichen Verfahren wie Chemical Vapour Deposition (CVD), Physical Vapour Deposition (PVD), Plasma Enhanced-Chemical Vapour Deposition (PE-CVD), Plasma Enhanced- Physical Vapour Deposition (PE-PVD), Galvanisieren, Sputtern, Plasmaspritzen, Flammspritzen oder Plasma Transferred-Arc. Ein ebenfalls bekanntes Beschichtungsverfahren ist das Laserbeschichten.

Näher beschrieben ist die Aufbringung einer Lagerschicht direkt auf ein Pleuelauge durch thermisches Spritzen in der DE 197 31 625 A1. Der Lagerwerkstoff wird mittels einer rotierenden Spritzdüse, welche bereits oberhalb des Pleuelauges rotierend in das Pleuelauge eingefahren wird, aufgespritzt, so dass sich die Beschichtung durch eine spiralige Aneinanderreihung von einzelnen Beschichtungsraupen ergibt.

Es hat sich gezeigt, dass sich der Beschichtungsbeginn besonders schwierig gestaltet. Die erste Beschichtungsraupe kann häufig nur sehr langsam erzeugt werden und ist oft stark fehlerbehaftet. Beispielsweise ist die Schichtdicke nicht ausreichend oder es entstehen Fehlstellen, Anbindungsfehler und/oder Poren. Besonders kritisch sind Bauteile mit geringem Bohrungsdurchmesser, bei welchen der Anstellwinkel des Beschichtungskopfes zur Bohrungsoberfläche 60° unterschreitet, wie kleines Pleuelauge. Eine fehlerbehaftete Schichtzone kann bedingt durch Fresser aufgrund Ausbröckelung zu einem Versagen der Brennkraftmaschine führen und muss daher unbedingt vermieden werden.

Ferner geht bei den bekannten Verfahren eine überproportional große Menge des wertvollen Beschichtungsmaterials als sog. "Overspray" verloren, da bei der ersten Beschichtungsraupe das Beschichtungsmaterial zum großen Teil schwerkraftbedingt bzw. durch Schutz- oder Trägergas weggespült wird und so nicht zur Anlagerung am Grundwerkstoff des Pleuels gelangt. Als Folge ergibt sich eine sehr schlechte Pulverausnutzung, eine teuere und aufwändige Wiederaufbereitung ist erforderlich, der Verlust von Beschichtungsmaterial ist nachteilig.

Es hat sich daher als erforderlich erwiesen, das zu beschichtende Bauteil beispielsweise mit einer überlangen Bohrung zu versehen, wobei der fehlerbehaftete anfangsseitige Beschichtungsbereich in einen überstehenden Bereich gelegt wird, welcher dann bei der folgenden Weiterbearbeitung entfernt wird. Es ergibt sich ein erhöhter Werkstoffeinsatz sowohl bauteilseitig als auch bezüglich des Beschichtungsmaterials.

Alternativ muss die erste Beschichtungsraupe ohne Vorschub des Beschichtungskopfes nochmals beschichtet werden, so dass eine gegenüber den nachfolgenden unter Vorschub aufgebrachten Beschichtungsraupen, bei welchen das Beschichtungsmaterial sich an der bereits aufgebrachten Vorgängerraupe anlegt, annähernd gleiche Schichtdicke erreicht wird. Der Beschichtungsprozess kann nur langsam beginnen und dauert lange.

Aufgabe der Erfindung ist es, ein eingangs genanntes Verfahren bereitzustellen, welches prozesssicher, kostengünstig und einfach die Herstellung eines Pleuels insbesondere einer Kraftfahrzeugbrennkraftmaschine, mit einer innenbeschichteten Bohrung ermöglicht.

Die Lösung der Aufgabe erfolgt mit den Merkmalen des Anspruchs 1, wobei gemäß der zugrundeliegenden Idee die zur Beschichtung vorbereitete Bohrung einen durchmesserverringerten Bereich aufweist.

Vorteilhafte Weiterbildungen des Verfahrens sind Gegenstand der Unteransprüche.

Gemäß einer besonders bevorzugten Weiterbildung des erfindungsgemäßen Verfahrens ist der durchmesserverringerte Bereich bohrungsendseitig angeordnet, es wird dabei davon ausgegangen, dass die Bohrung einen ersten und einen zweiten Endbereich aufweist, zwischen welchen sie sich in axialer Richtung erstreckt.

Als sehr zweckmäßig wird es angesehen, wenn der durchmesserverringerte Bereich einen gegenüber dem Bohrungsdurchmesser um wenigstens die einfache Dicke der aufzutragenden Beschichtung verringerten Durchmesser aufweist und der Übergang von der Bohrung zum durchmesserverringerten Bereich radienförmig verläuft, so dass bei einer Aufbringung der Beschichtung ausgehend vom Endbereich, raupenartig, spiralförmig umlaufend, insbesondere die erste Beschichtungsraupe sich in axialer Bohrungsrichtung an den durchmesserverringerten Bereich anlegt.

Von Vorteil ist es, wenn der Radius zwischen Bohrung und durchmesserverringertem Bereich der Beschichtung, insbesondere dem Beschichtungsverfahren, dem Schichtwerkstoff und/oder der Schichtdicke angepasst ist.

Sehr günstig ist es, wenn die Beschichtung ausgehend vom durchmesserverringerten Bereich spiralförmig umlaufend auf der Bohrungsinnenseite aufgebracht wird, wobei der durchmesserverringerte Bereich in Bohrungsachsrichtung von der aufzubringenden Beschichtung zumindest teilweise überdeckt wird.

Erfindungsgemäß wird der durchmesserverringerte Bereich nach Aufbringen der Beschichtung zusammen mit dem Anfang der Beschichtungsraupe entfernt. Beispielsweise liegt der durchmesserverringerte Bereich in einem Bereich, welcher im Rahmen der weiteren Bearbeitung entfernt wird, wie im Bereich einer Fase.

Die Herstellung der zur Beschichtung vorbereiteten Bohrung im Pleuel erfolgt zweckmäßigerweise durch Einbringung einer ersten Bohrung mit einem dem durchmesserverringerten Bereich entsprechenden Durchmesser. In einem zweiten Schritt wird die erste Bohrung aufgebohrt oder aufgefräst, wobei der durchmesserverringerte Bereich stehen bleibt.

Bevorzugt wird im zweiten Schritt ein gerundeter Übergang von der Bohrung zum durchmesserverringerten Bereich erzeugt.

Als besonders vorteilhaft wird jedoch die Herstellung der zur Beschichtung vorbereiteten Bohrung mit durchmesserverringerten Bereich in einem Arbeitsschritt, beispielsweise mittels eines geeigneten gestuften Werkzeugs, angesehen.

Nachfolgend wird unter Bezugnahme auf Figuren eine besonders zu bevorzugende Weiterbildung des erfindungsgemäßen Verfahrens näher erläutert, dabei zeigen schematisch und beispielhaft
- Figur 1a: einen Beschichtungsprozess mittels pulver- oder drahtförmigem Beschichtungsgut in Draufsicht,
- Figur 1b: einen Beschichtungsprozess mittels pulver- oder drahtförmigem Beschichtungsgut im Schnitt,
- Figur 2a: einen Beschichtungsprozess mittels schmelzförmigem Beschichtungsgut in Draufsicht,
- Figur 2b: einen Beschichtungsprozess mittels schmelzförmigem Beschichtungsgut im Schnitt und
- Figur 3: ein zur Innenbeschichtung des großen Pleuelauges vorbereitetes Pleuel.

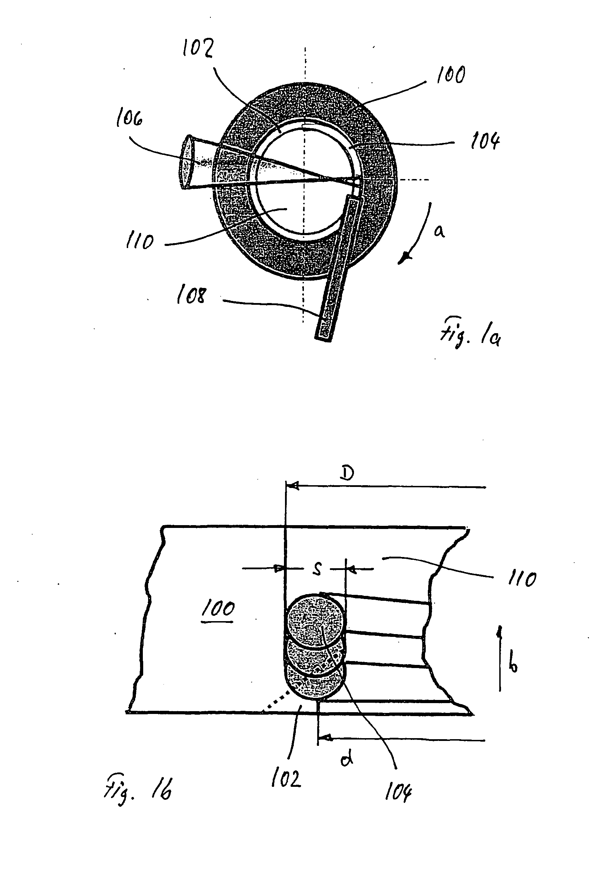

Figur 1a zeigt einen Beschichtungsprozess mittels pulver- oder drahtförmigem Beschichtungsgut in Draufsicht, eine Schnittdarstellung des selben Prozesses zeigt Figur 1b. Das zur Innenbeschichtung eines Pleuelauges 110 vorbereitete Pleuel 100 umfasst einen durch einen Bereich geringeren Durchmessers gebildeten durchmesserverringerten Bereich 102. Der Durchmesser des Pleuelauges ist in der Figur 1b mit D bezeichnet, d bezeichnet den Durchmesser des durchmesserverringerten Bereichs102.

Der Übergang vom Durchmesser D zum Durchmesser d verläuft radienförmig, wobei sowohl der Übergangsradius als auch die Breite des durchmesserverringerten Bereichs 102 der Beschichtungsraupe 104 angepasst sind. Mit den aneinanderliegenden Beschichtungsraupen 104 wird die Innenbeschichtung des Pleuelauges 110 mit einer Schichtdicke s gebildet.

Der durchmesserverringerte Bereich 102 und die an ihm anliegende erste Beschichtungsraupe, welche häufig sehr dünn ist und Fehlerstellen, Anbindungsfehler und/oder Poren aufweist, liegt in einem in der Figur 1b mit einer gepunkteten Linie abgetrennten Bereich, welcher bei der folgenden Fertigbearbeitung des Pleuels 100 entfernt wird, beispielsweise zur Ausbildung einer Fase am Endbereich des Pleuelauges 110.

Die Beschichtung erfolgt - wie in Fig. 1a dargestellt - mittels einer Beschichtungseinrichtung, welche eine Zuführung 108 für den pulver- oder drahtförmigen Beschichtungswerkstoff sowie einen Laserstrahl 106 umfasst. Die Zuführung des Beschichtungswerkstoffs erfolgt wie dargestellt lateral oder alternativ koaxial. Als Laserquelle kommt ein Diodenlaser oder ein Festkörperlaser wie Nd:YAG-Laser mit einer Leistung von ca. 1,5-3,5 kW zur Anwendung. Der Beschichtungswerkstoff wird durch die Zuführung 108 zugeführt und tritt, falls es sich um ein Pulver handelt, strahlartig aus; der Laserstrahl 106 wird mittels optischer Elemente fokussiert.

Die Beschichtungseinrichtung ist relativ zum Bauteil 100 drehbar und/oder verschiebbar, ggf. sind der Fokus des Laserstrahls 106 und/oder die Zuführung 108 verstellbar, so dass das Beschichtungsmaterial zur Innenbeschichtung des Pleuelauges 110 durch Drehung und gleichzeitige Verschiebung der Beschichtungseinrichtung - oder alternativ des Bauteils 100 - raupenförmig, spiralartig umlaufend aufgebracht wird, wobei jede Beschichtungslage sich an der vorhergehenden anlegt. In den Figuren 1 ist dabei mit a die Rotation und mit b die Vorschubrichtung verdeutlicht. Zur Anlage der ersten Beschichtungsraupe 104 ist der durchmesserverringerte Bereich 102 vorgesehen.

Das aus der Zuführung 108 austretende Beschichtungsmaterial wird in Richtung des zu beschichtenden Bauteiles versprüht bzw. wird drahtförmig zugeführt, wobei es zumindest teilweise durch die Hitze des Laserstrahles aufgeschmolzen wird. Das Beschichtungsmaterial wird dabei in die Nähe des Laserstrahles 106 oder durch diesen hindurch geführt. Falls pulverförmiges Beschichtungsmaterial verwendet wird, tritt dieses strahlartig derart aus der Zuführung 108 aus, dass beim Auftreffen auf die zu beschichtende Bauteiloberfläche des Bauteiles 100 der erforderliche Bereich mit der gewünschten Menge Beschichtungsmaterial beaufschlagt wird; Bei einer drahtförmigen Zuführung wird die Beschichtungsmaterialmenge abhängig vom Drahtdurchmesser vorschubgeregelt. Der Fokus des Laserstrahles 106 wird dabei so eingestellt, dass er genau auf der Bauteiloberfläche liegt; Je nach Zusatzwerkstoff und Prozessführung kann es auch vorteilhaft sein, die Beschichtungseinrichtung derart zu führen, dass die Bauteiloberfläche oberhalb oder unterhalb des Fokus zu liegen kommt. Die Energiedichte im Brennfleck des Laserstahles beträgt dabei ca. 10⁴-10⁵ W/cm2.

Es erfolgt pleuelaugeninnenseitig ein kombiniertes Auf-/Einbringen des Beschichtungsmaterials. Abhängig von Zusatzwerkstoff und Prozessführung erfolgt entweder ein Einlegieren im 1/10 mm-Bereich verbunden mit einem Aufbringen einer einige Millimeter, ca. 0,2-3 mm, dicken Schicht oder hauptsächlich ein Einlegieren im Bereich bis ca. 1 mm; Die Lagerbeschichtung ist auf diese Weise fest im Grundmaterial verankert.

Während des Beschichtungsvorganges wird das Bauteil - das Pleuel - zweckmäßigerweise gekühlt. Dabei wird ein Kompromiss zwischen einer schnellen Wärmeabfuhr zur Verhinderung eines zu weiten Aufschmelzens bzw. einer zu großen Erhitzung des Grundwerkstoffes und zwischen einem langsamen Abkühlen und geringen Temperaturdifferenzen zur Vermeidung von Rissen in dem Lagerwerkstoff angestrebt.

Um die Bildung unerwünschter Oxide zu vermeiden, erfolgt der gesamte Beschichtungsvorgang unter Schutzgasatmosphäre wie beispielsweise unter Argon oder Stickstoff. Ein pulvriger Beschichtungswerkstoff wird mit inertem Trägergas in der Zuführung 108 gefördert, zusätzliches Schutzgas kann in einer separaten Leitung zugeführt werden.

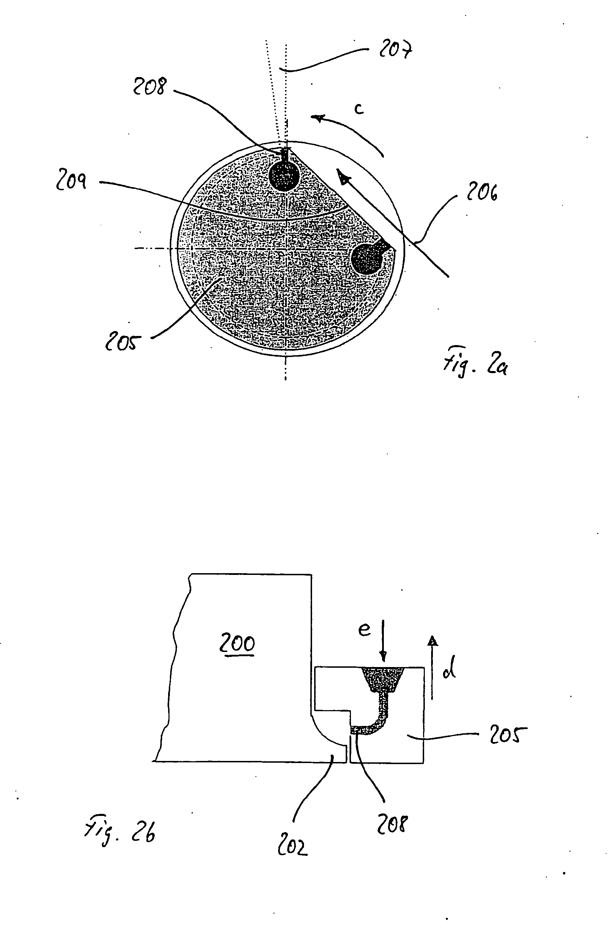

Alternativ zur beschriebenen Aufbringung kann das Beschichtungsmaterial auch beispielsweise als schmelzförmiges Beschichtungsgut aufgebracht werden. Diese Weiterbildung des Verfahrens ist mit Figur 2a in Draufsicht und mit Figur 2b im Schnitt dargestellt. Die Beschichtungseinrichtung umfasst einen keramischen Beschichtungskopf 205 mit einer Schmelzenaustrittsbohrung 208. Das schmelzförmige Beschichtungsgut tritt entsprechend der punktierten Darstellung aus, wobei der Austrittskegel 207 vorzugsweise leicht in Drehrichtung c geneigt liegt. Der Beschichtungskopf 205 weist einen vorzugsweise abgeflacht ausgestalteten Bereich 209 auf, so dass einen ungehinderter Zugang des Laserstrahls 206 ermöglicht ist.

In der Schnittdarstellung mit Figur 2b ist analog zur Weiterbildung nach Figur 1a/1b das Pleuel 200 mit durchmesserverringertem Bereich 202 gezeigt, d kennzeichnet die Vorschubrichtung der Beschichtungseinrichtung während dem Beschichtungsprozess, die Zuführung des schmelzförmigen Beschichtungsguts erfolgt entsprechend der Pfeilrichtung e.

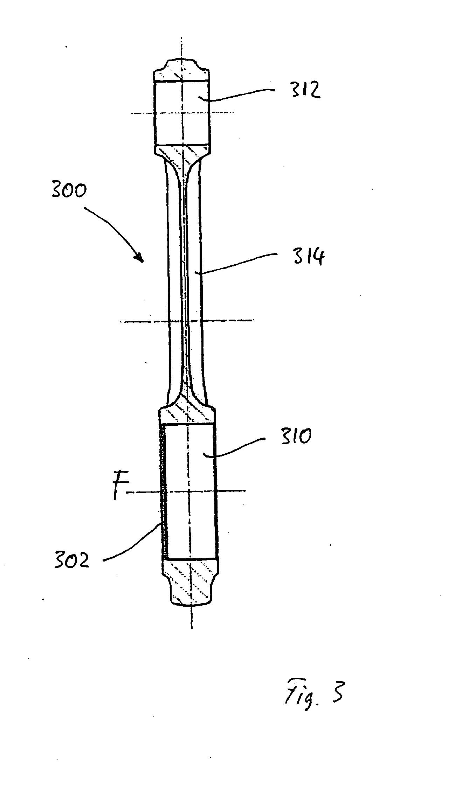

Ein zur Innenbeschichtung des großen Pleuelauges 310 vorbereitetes Pleuel 300 ist mit Figur 3 dargestellt. Das Pleuel 300 weist ein kleines Pleuelauge 312 zur Anlenkung an einen Kolben mittels eines Kolbenbolzens auf, das große Pleuelauge 310 dient zur Verbindung mit dem Hubzapfen einer Kurbelwelle. Beide Pleuelaugen 310, 312 sind verbunden mittels einer Pleuelstange 314. Während das kleine Pleuelauge 312 geschlossen ausgestaltet ist und der Kolbenbolzen eingeschoben wird, ist das große Pleuelauge 310 geteilt ausgeführt, wobei die Teilung beispielsweise mittels Cracken entsprechend der Trennebene F erfolgt.

Bohrungsendseitig ist am große Pleuelauge 310 ein durchmesserverringerter Bereich 302 vorgesehen, von welchem ausgehend spiralförmig die innenseitige Beschichtung des großen Pleuelauges 310 erfolgt. Der durchmesserverringerte Bereich 302 wird in einem folgenden Arbeitsgang zusammen mit dem Beginn der Beschichtungsraupe entfernt, wobei am Pleuelauge eine Fase gebildet wird. Es schließt der Crackprozess, umfassend auch die Erzeugung von Sollbruchstellen beispielsweise mittels Laserperforation, an.

Mit der beschriebenen Lagerbeschichtung erübrigt sich der Einsatz von Gleit- oder Wälzlagern, so dass insbesondere Gewichts- und Kostenvorteile erreicht werden. Auch wenn vorliegend nur auf die Beschichtung des großen Pleuelauges 310 Bezug genommen wird, kann selbstverständlich auch alternativ oder zusätzlich eine Beschichtung des kleinen Pleuelauges 312 erfolgen. Die Beschichtung kann nicht nur, wie beschrieben, bohrungsinnenseitig, sondern auch an den seitlichen Anlaufflächen aufgebracht werden.

## Patentansprüche

1. Verfahren zur Herstellung eines Pleuel, insbesondere einer Kraftfahrzeugbrennkraftmaschine, mit einer innenbeschichteten Bohrung, **dadurch gekennzeichnet, dass** die zur Beschichtung vorbereitete Bohrung (110, 210, 310) einen durchmesserverringerten Bereich (102, 202, 302) aufweist, die Beschichtung ausgehend vom durchmesserverringerten Bereich (102, 202, 302) spiralförmig umlaufend auf der Bohrungsinnenseite aufgebracht wird und der durchmesserverringerte Bereich (102, 202, 302) nach Aufbringen der Beschichtung zusammen mit dem Anhang der Beschichtungsraupe entfernt wird.

2. Verfahren nach Anspruch 1, **dadurch gekennzeichnet, dass** der dürchmesserverringerte Bereich (102, 202, 302) bohrungsendseitig angeordnet ist.

3. Verfahren nach Anspruch 1 oder 2, **dadurch gekennzeichnet, dass** der durchmesserverringerte Bereich (102, 202, 302) einen gegenüber dem Böhrungsdurchmesser (D) um wenigstens die einfache Dicke (s) der aufzutragenden Beschichtung verringerten Durchmesser (d) aufweist.

4. Verfahren nach einem der vorhergehenden Ansprüche, **dadurch gekennzeichnet, dass**
- die Beschichtung raupenartig spiralförmig umlaufend auf der Bohrungsinnenseite aufgebracht wird, wobei
- der Übergang von der Bohrung (110, 210, 310) zum durchmesserverringerten Bereich (102, 202, 302) radienförmig verläuft.

5. Verfahren nach einem der vorhergehenden Ansprüche, **dadurch gekennzeichnet, dass** der Radius zwischen Bohrung (110, 210, 310) und durchmesserverringertem Bereich (102, 202, 302) der Beschichtung angepasst ist.

6. Verfahren nach einem der vorhergehenden Ansprüche, **dadurch gekennzeichnet, dass**
- der durchmesserverringerte Bereich (102, 202, 302) in Bohrungsachsrichtung von der aufzubringenden Beschichtung zumindest teilweise überdeckt wird.

7. Verfahren nach einem der vorhergehenden Ansprüche, **dadurch gekennzeichnet, dass** zur Herstellung der zur Beschichtung vorbereiteten Bohrung (110, 210, 310) im Bauteil eine erste Bohrung mit einem dem durchmesserverringerten Bereich (102, 202, 302) entsprechenden Durchmesser eingebracht und diese in einem zweiten Schritt aufgebohrt öder aufgefräst wird, wobei der durchmesserverringerte Bereich (102, 202, 302) stehen bleibt.

8. Verfahren nach Anspruch 7, **dadurch gekennzeichnet, dass** im zweiten Schritt ein gerundeter Übergang von der Bohrung (110, 210, 310) zum durchmesserverringerten Bereich (102, 202, 302) erzeugt wird.

9. Verfahren nach einem der vorhergehenden Ansprüche, **dadurch gekennzeichnet, dass** die Herstellung der zur Beschichtung vorbereiteten Bohrung (110, 210, 310) mit durchmesserverringerten Bereich (102, 202, 302) in einem Arbeitsschritt erfolgt.

## Claims

1. A method of producing a connecting rod, especially for an internal combustion engine of a motor vehicle, comprising an internally coated bore, **characterised in that** the bore (110, 210, 310) for coating has a reduced-diameter region (102, 202, 302), the coating is applied in a spiral to the inside of the bore, starting from the reduced-diameter region (102, 202, 302) and the reduced-diameter region (102, 202, 302) is removed after applying the coating, together with the beginning of the coating bead.

2. A method according to claim 1, **characterised in that** the reduced-diameter region (102, 202, 302) is disposed at the end of the bore.

3. A method according to claim 1 or claim 2, **characterised in that** the reduced-diameter region (102, 202, 302), compared with the bore diameter (D), has a diameter (d) reduced by at least a single thickness (s) of the applied coating.

4. A method according to any of the preceding claims, **characterised in that**
- the coating is applied in a spiral bead around the inside of the bore, wherein
- the transition from the bore (110, 210, 310) to the reduced-diameter region (102, 202, 302) is radial.

5. A method according to any of the preceding claims, **characterised in that** the radius between the bore (110, 210, 310) and the reduced-diameter region (102, 202, 302) is adapted to the coating.

6. A method according to any of the preceding claims, **characterised in that**
- the reduced-diameter region (102, 202, 302) is at least partly covered by the applied coating in the axial direction of the bore.

7. A method according to any of the preceding claims, **characterised in that** in order to produce the bore (110, 210, 310) for coating, a first bore is made in the component with a diameter corresponding to the reduced-diameter region (102, 202, 302) and in a second step the bore is additionally drilled or milled, without touching the reduced-diameter region (102, 202, 302).

8. A method according to claim 7, **characterised in that** in the second step a rounded transition is made from the bore (110, 210, 310) to the reduced-diameter region (102, 202, 302).

9. A method according to any of the preceding claims, **characterised in that** the bore (110, 210, 310) for coating and with the reduced-diameter region (102, 202, 302) is made in a single step.

## Revendications

1. Procédé de fabrication d'une bielle, notamment destinée à un moteur à combustion interne de véhicule automobile, comportant un alésage muni d'un revêtement intérieur,
procédé **caractérisé en ce que**
- l'alésage (110, 210, 310) préparé pour recevoir le revêtement a une zone (102, 202, 302) de diamètre réduit,
- le revêtement est appliqué sur le côté intérieur de l'alésage suivant un tracé en spirale à partir de la zone (102, 202, 302) de diamètre réduit, et
- la zone (102, 202, 302) de diamètre réduit, est enlevée après application du revêtement, en même temps que le début du cordon formant le revêtement.

2. Procédé selon la revendication 1,
**caractérisé en ce que**
la zone (102, 202, 302) de diamètre réduit, se trouve du côté de l'extrémité de l'alésage.

3. Procédé selon la revendication 1 ou 2,
**caractérisé en ce que**
la zone (102, 202, 302) de diamètre réduit, présente par rapport au diamètre (D) de l'alésage, un diamètre (d) diminué au moins de la simple épaisseur (s) du revêtement qui doit être appliqué.

4. Procédé selon l'une des revendications précédentes,
**caractérisé en ce qu'**
- on applique le revêtement sous la forme d'un cordon en spirale tournant sur le côté intérieur de l'alésage, et
- la transition entre l'alésage (110, 210, 310) et la zone (102, 202, 302) de diamètre réduit, est faite suivant un tracé radial.

5. Procédé selon l'une des revendications précédentes,
**caractérisé en ce que**
le rayon entre l'alésage (110, 210, 310) et la zone (102, 202, 302) de diamètre réduit, est adapté au revêtement.

6. Procédé selon l'une des revendications précédentes,
**caractérisé en ce que**
la zone (102, 202, 302) de diamètre réduit, est recouverte dans la direction axiale de l'alésage, au moins en partie, par le revêtement appliqué.

7. Procédé selon l'une des revendications précédentes,
**caractérisé en ce que**
pour réaliser l'alésage (110, 210, 310) préparé pour recevoir le revêtement dans la pièce, on réalise un premier perçage avec une zone (102, 202, 302) de diamètre réduit et dans une seconde étape, on élargit le perçage ou on fraise pour laisser la zone (102, 202, 302) de diamètre réduit.

8. Procédé selon la revendication 7,
**caractérisé en ce que**
dans la seconde étape, on réalise une transition arrondie entre le perçage (110, 210, 310) et la zone de diamètre réduit (102, 202, 302).

9. Procédé selon l'une des revendications précédentes,
**caractérisé en ce qu'**
on réalise le perçage (110, 210, 310) préparé pour recevoir le revêtement avec une zone de diamètre réduit (102, 202, 302) dans une étape de travail.
